# EUROPÄISCHE PATENTANMELDUNG

(11) **EP 3 252 337 A1**
(43) Veröffentlichungstag der Anmeldung: **06.12.2017**
(21) Anmeldenummer: 17170690.6
(22) Anmeldetag: 11.05.2017
(51) Int. Cl.: F16F 9/46, B60N 2/52

(54) **DÄMPFER**

(30) Priorität: 03.06.2016 DE 102016209824
(71) Anmelder: SUSPA GmbH, 90518 Altdorf (DE)
(72) Erfinder: Böhrer, Andreas, 92318 Neumarkt (DE); Stephan, Florian, 91074 Herzogenaurach (DE)
(74) Vertreter: Rau, Schneck & Hübner Patentanwälte Rechtsanwälte PartGmbB

(57) **Zusammenfassung**

Ein Dämpfer umfasst ein einen Arbeitsraum (5) aufweisendes Gehäuse (8), in dem Arbeitsraum (5) befindliches Dämpfungsfluid (10), eine im Arbeitsraum (5) angeordnete Kolben-Einheit (11) mit einer eine Längsachse (7) aufweisenden Kolbenstange (12), einem an der Kolbenstange (12) befestigten Kolben (13), der den Arbeitsraum (5) in einen ersten Teil-Arbeitsraum (17) und in einen zweiten Teil-Arbeitsraum (19) unterteilt, einem den ersten Teil-Arbeitsraum (17) und den zweiten Teil-Arbeitsraum (19) verbindenden Durchströmkanal (71), eine Verstelleinheit (101) zum Verstellen der Dämpfungskraft des Dämpfers (1) mit einem Verstellelement (102) zum Verstellen der effektiven Strömungsquerschnittsfläche des Durchströmkanals (71), einem Verstellaktor (105) zum automatisierten Verstellen einer Anordnung des Verstellelements (102) und der Kolbenstange (12), wobei die Verstelleinheit (101) innerhalb des Dämpfers (1) angeordnet ist.

## Beschreibung

Der Inhalt der deutschen Patentanmeldung DE 10 2016 209 824.1 wird durch Bezugnahme hierin aufgenommen.

Die Erfindung betrifft einen Dämpfer.

Ein Dämpfer ist aus der DE 10 2010 029 180 A1 bekannt.

Es ist die Aufgabe der vorliegenden Erfindung, einen Dämpfer derart zu verbessern, dass dessen Dämpfungswirkung unkompliziert, insbesondere automatisiert, und robust einstellbar ist.

Diese Aufgabe ist erfindungsgemäß gelöst durch einen Dämpfer mit den in Anspruch 1 angegebenen Merkmalen.

Erfindungsgemäß wurde erkannt, dass eine Verstelleinheit zum Verstellen einer Dämpfungskraft eines Dämpfers innerhalb des Dämpfers angeordnet ist. Die Verstelleinheit ist insbesondere in einem Gehäuse des Dämpfers angeordnet. Ein derartiger Dämpfer weist eine besonders kompakte Bauform auf. Der Dämpfer, insbesondere die Verstelleinheit, weist eine erhöhte Funktionsintegration auf. Der erfindungsgemäße Dämpfer kann beispielsweise zur Verstellung eines Fahrzeugsitzes, insbesondere eines Sitzes in einem Lastkraftwagen oder in einem Personenkraftwagen verwendet werden. Eine separate elektromechanische Kopplung des Dämpfers mit einer extern angeordneten Verstelleinheit ist entbehrlich. Dadurch ergibt sich eine reduzierte Baugröße. Außerhalb des Dämpfers angeordnete Kraftübertragungselemente zwischen der Verstelleinheit und dem Dämpfer sind entbehrlich. Das Gehäuse weist einen Arbeitsraum auf, in dem sich Dämpfungsfluid befindet. In dem Arbeitsraum ist eine Kolben-Einheit angeordnet mit einer eine Längsachse aufweisenden Kolbenstange, einem an der Kolbenstange befestigten Kolben, der den Arbeitsraum in einen ersten Teil-Arbeitsraum und in einen zweiten Teil-Arbeitsraum unterteilt. Die Verstelleinheit kann auch innerhalb der Kolbenstange angeordnet sein. Eine Verlagerung der Kolbenstange entlang der Längsachse gegenüber dem Gehäuse kann bewirken, dass die innerhalb der Kolbenstange angeordnete Verstelleinheit außerhalb des Gehäuses zumindest bereichsweise und/oder zeitweise angeordnet ist. Eine derartige Anordnung der Verstelleinheit ist als innerhalb des Dämpfers im Sinne der Erfindung zu verstehen.

Der erste Teil-Arbeitsraum und der zweite Teil-Arbeitsraum sind über einen Durchströmkanal miteinander verbunden. Die Verstelleinheit weist ein Verstellelement auf, mit dem eine effektive Strömungsquerschnittsfläche des Strömungskanals verstellt werden kann. Zum automatisierten Verstellen dient ein Verstellaktor, der eine Anordnung des Verstellelements und der Kolbenstange verstellt. Der erfindungsgemäße Dämpfer weist insbesondere gegenüber einem mittels eines Magnetventils geregelten Dämpfer den Vorteil einer vereinfachten, unkomplizierten Bauweise auf. Der erfindungsgemäße Dämpfer ist kompakt und platzsparend ausgeführt und fehlerunanfällig. Der erfindungsgemäße Dämpfer ermöglicht eine Verstellung innerhalb eines Zeitintervalls von weniger als 1 s, insbesondere weniger als 500ms, insbesondere weniger als 300ms. Ein weiterer wesentlicher Vorteil des erfindungsgemäßen Dämpfers besteht darin, dass eine dauerhafte Bestromung, also eine dauerhafte Bereitstellung von elektrischem Strom, entbehrlich ist.

Eine Steuerungseinheit gemäß Anspruch 2 vereinfacht das automatisierte Verstellen der Dämpfungskraft. Insbesondere ist es möglich, mittels eines gezielten Steuerungssignals, das von der Steuerungseinheit an die Verstelleinheit übertragen wird, eine gezielte Verstellung des Verstellelements gegenüber der Kolbenstange zu bewirken.

Eine Verstellbarkeit gemäß Anspruch 3 ermöglicht eine vorteilhafte, unmittelbare Verstellung der Strömungsquerschnittsfläche des Durchströmkanals.

Eine Ausführung des Dämpfers gemäß Anspruch 4 ermöglicht eine unkomplizierte Bauweise. Das Verstellelement ist insbesondere drehbar in der Kolbenstange angeordnet. Das Verstellelement ist insbesondere drehantreibbar bezüglich der Kolbenstange und insbesondere bezüglich des Gehäuses ausgeführt.

Die Ausführung des Verstellelements gemäß Anspruch 5 ermöglicht eine gezielte, insbesondere stufenweise Abdeckung einer Mehrzahl von Durchgangsöffnungen, die den Durchströmkanal bilden. Gestuft bedeutet, dass in einer Richtung parallel zur Längsachse der Wellenabsatz unterschiedliche Längen aufweist, so dass Durchströmöffnungen, die in einer Mantelwand der Kolbenstange ausgeführt sind, in Abhängigkeit der relativen Drehposition des Verstellelements gegenüber der Kolbenstange abgedeckt beziehungsweise freigegeben sind.

Die Ausführung des Dämpfers gemäß Anspruch 6 ermöglicht eine unkomplizierte Ausführung des Verstellelements. Eine Einstellung der Dämpfungswirkung erfolgt mittels einer Axialverstellung des Verstellelements. Mittels einer Kinematik-Vorrichtung wird insbesondere eine rotatorische Antriebsbewegung des Verstellaktors in eine Axialverlagerung des Verstellelements überführt. Das Verstellelement ist insbesondere bezüglich der Kolbenstange verlagerbar insbesondere angetrieben verlagerbar.

Vorteilhafte Ausgestaltungen des Verstellelements gemäß Anspruch 7 oder 8 ermöglichen eine unkomplizierte Umsetzung der axialen Verlagerbarkeit des Verstellelements.

Die integrierte Anordnung gemäß Anspruch 9 ist besonders platzsparend. Insbesondere wurde erkannt, dass die Kolbenstange effektiv dadurch genutzt werden kann, dass ein darin angeordnetes Volumen als Bauraum für die Verstelleinheit genutzt werden kann. Insbesondere ist es nicht erforderlich, zusätzlichen Bauraum innerhalb oder außerhalb des Dämpfers zu schaffen, um die Verstelleinheit unterzubringen. Bei dieser Ausführung ist eine Ausgestaltung eines Dämpfers mit erhöhter Funktionalität und gleichbleibender Baugröße möglich.

Ein Dämpfer gemäß Anspruch 10 ermöglicht eine effektive Integration der Verstelleinheit. Rohrförmig bedeutet, dass die Kolbenstange hohl ausgeführt ist. Vorteilhaft ist es, wenn die Außenkontur der Kolbenstange kreisförmig ist. Vorteilhaft ist es, wenn die Innenkontur der Kolbenstange kreisförmig ist. Insbesondere die Innenkontur kann auch eine andere Form aufweisen, die insbesondere unrund bezüglich der Längsachse ausgeführt ist.

Eine Positionserkennungseinheit gemäß Anspruch 11 vereinfacht die Verstellung der Dämpfungswirkung, insbesondere bei einer Trennung des Dämpfers von der Stromversorgung. Die Positionserkennungseinheit steht insbesondere mit der Verstelleinheit in Signalverbindung. Die Positionserkennungseinheit steht insbesondere mit der Steuerungseinheit in Signalverbindung.

Ein Referenzelement gemäß Anspruch 12 vereinfacht die unmittelbare Positionserkennung, insbesondere mittels eines Encoders. Das Referenzelement kann beispielsweise eine Referenzmarke oder ein Multiturngeber sein. Das Referenzelement ist insbesondere als mechanische Referenz, insbesondere als Anschlagelement, ausgeführt. Wenn das Verstellelement gegen das Referenzelement fährt, führt dies zu einem signifikanten Anstieg des Motorstroms des Verstellaktors. Die Steuerungseinheit kann diesen signifikanten Anstieg des Motorstroms als Erreichen des Referenzelements erfassen.

Ein Dämpfer gemäß Anspruch 13 ermöglicht eine unkomplizierte Bereitstellung eines Verstellaktors.

Ein Dichtungselement gemäß Anspruch 14 gewährleistet, dass Dämpfungsfluid nicht unbeabsichtigt aus dem Arbeitsraum des Dämpfers über die Kolbenstange austritt. Das Dichtungselement ist beispielsweise als O-Ring ausgeführt und dichtet die Verstelleinheit radial an einer Zylinderinnenfläche der Kolbenstange ab. Die Position des Dichtungselements entlang der Längsachse kann unterschiedlich festgelegt sein. Beispielsweise ist es denkbar, dass Verstellelement in der Kolbenstange abzudichten. Das Verstellelement ist insbesondere dem Arbeitsraum des Dämpfers zugewandt angeordnet. Es ist auch möglich, dass Dichtungselement an einer dem Arbeitsraum abgewandten Oberseite des Verstellaktors anzubringen. Bei einer derartigen Ausführung sind insbesondere das Verstellelement und der Verstellaktor vom Dämpfungsfluid, insbesondere Dämpfungsöl, umgeben.

Weitere vorteilhafte Ausgestaltungen, zusätzliche Merkmale und Einzelheiten der Erfindung ergeben sich aus der nachfolgenden Beschreibung von Ausführungsbeispielen anhand der Zeichnung. Es zeigen:
- Fig. 1: eine perspektivische Darstellung eines Längsschnitts durch einen Dämpfer gemäß einem ersten Ausführungsbeispiel,
- Fig. 2: eine vergrößerte Teilansicht einer ersten Anordnung einer Verstelleinheit gemäß Fig. 1,
- Fig. 3: eine Fig. 2 entsprechende Ansicht in einer zweiten Anordnung der Verstelleinheit,
- Fig. 4: ein Längsschnitt durch eine Kolbenstange mit integrierter Verstelleinheit eines Dämpfers gemäß einem zweiten Aus-Führungsbeispiel in einer ersten Anordnung,
- Fig. 5: eine Fig. 4 entsprechende Darstellung mit der Verstelleinheit in einer zweiten Anordnung,
- Fig. 6: eine schematische Darstellung einer Verstell-Kinematik gemäß einem dritten Ausführungsbeispiel.

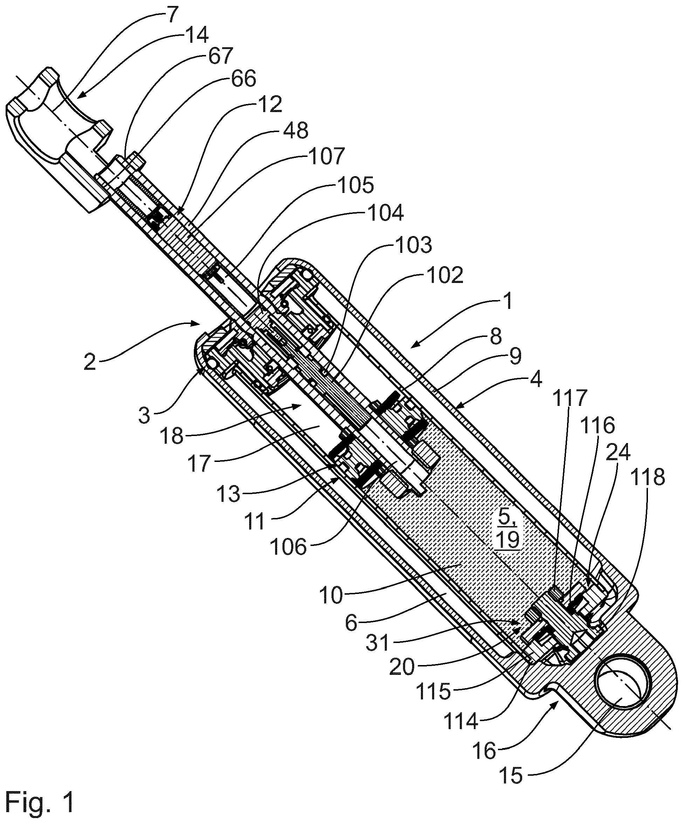

Ein in Fig. 1 bis 3 gezeigter Dämpfer 1 ist ein Fluid-Dämpfer. Aufbau und Funktion eines derartigen Fluid-Dämpfers sind aus DE 10 2010 029 180 A1 bekannt, worauf hiermit verwiesen wird.

Der Dämpfer 1 weist ein Gehäuse 4 mit einem ersten Gehäuse-Ende 2 und einem zweiten Gehäuse-Ende 16 auf. Das Gehäuse 4 ist am ersten Gehäuse-Ende 2 durch eine Führungs- und Dichtungs-Einheit 3 abgeschlossen. Am zweiten Gehäuse-Ende 16 weist das Gehäuse 4 ein zweites Befestigungs-Element 15 auf. Das Gehäuse 4 umschließt einen Arbeitsraum 5 und einen Ausgleichsraum 6. Das Gehäuse 4 weist eine Längsachse 7 auf. Es ist insbesondere zumindest abschnittsweise rotationssymmetrisch zur Längsachse 7 ausgebildet. Das Gehäuse 4 kann doppelwandig ausgebildet sein. Es umfasst insbesondere ein inneres Gehäuse 8 und ein äußeres Gehäuse 9. Das äußere Gehäuse 9 umgibt das innere Gehäuse 8. Das äußere Gehäuse 9 kann insbesondere konzentrisch zum inneren Gehäuse 8 angeordnet sein. Der Ausgleichsraum 6 ist somit als ringzylinderförmiger Hohlraum ausgebildet.

In einer alternativen, in den Figuren nicht dargestellten Variante, kann das äußere Gehäuse 9 auch derart versetzt zum inneren Gehäuse 8 angeordnet sein, dass der Ausgleichsraum 6 entlang seines Umfangs eine variable, das heißt nicht konstante Breite aufweist. In diesem Fall kann der Ausgleichsraum 6 insbesondere topologisch zusammenziehbar ausgebildet sein.

Der Arbeitstraum 5 ist mit einem Dämpfungsfluid 10 gefüllt. Beim Dämpfungsfluid 10 handelt es sich insbesondere um ein hydraulisches Öl. Der Ausgleichsraum 6 ist teilweise mit dem Dämpfungsfluid 10 gefüllt. Der Rest des Ausgleichsraums 6 ist mit Gas, insbesondere mit Luft gefüllt.

Die Führungs- und Dichtungseinheit 3 umfasst ein erstes Dichtungs-Element 41, welches abgedichtet an der Kolbenstange 12 anliegt. Zur Halterung auf der Kolbenstange 12 weist das erste Dichtungs-Element 41 eine Ringnut 42 auf, in welcher ein Spannring 43 angeordnet ist. Des Weiteren umfasst die Führungs- und Dichtungseinheit 3 ein nach außen gegen das äußere Gehäuse 9 abgestütztes Stütz-Element 44. Das Stütz-Element 44 ist mittels eines Dichtungsrings 45 gegen das äußere Gehäuse 9 abgedichtet gelagert. Es weist ein zentrales Sackloch 46 auf. Die Führungs- und Dichtungseinheit 3 weist eine zentrale Bohrung 47 auf. Die Bohrung 47 ist insbesondere konzentrisch zur Längsachse 7 angeordnet. Durch die Bohrung 47 ist die Kolbenstange 12 geführt.

Außerdem umfasst der Dämpfer 1 eine Kolben-Einheit 11 mit einer Kolbenstange 12 und einem Kolben 13. Der Kolben 13 ist an der Kolbenstange 12 befestigt und in dem inneren Gehäuse 8 entlang der Längsachse 7 verschiebbar geführt. Die Kolbenstange 12 ist durch die Führungs- und Dichtungs-Einheit 3 abgedichtet aus dem Gehäuse 4 herausgeführt. An ihrem dem Kolben 13 entgegengesetzten Ende ist die Kolbenstange 12 mit einem ersten Befestigungs-Element 14 verbunden.

Der Kolben 13 unterteilt den Arbeitsraum 5 in einen dem ersten Gehäuse-Ende 2 zugewandten ersten Teil-Arbeitstraum 17 mit einem ersten Arbeitsraum-Ende 18 und einem dem zweiten Gehäuse-Ende 16 zugewandten zweiten Teil-Arbeitsraum 19 mit einem zweiten Arbeitsraum-Ende 20.

Am ersten Arbeitsraum-Ende 18 ist ein erstes Abschluss-Element 21 angeordnet. Das erste Abschluss-Element 21 ist im inneren Gehäuse 8 angeordnet. Das erste Abschluss-Element 21 kann insbesondere in das innere Gehäuse 8 eingesteckt, vorzugsweise eingepresst oder eingeschraubt sein. Es ist gegenüber dem inneren Gehäuse 8 mittels eines Dichtungsrings 22 abgedichtet. Das erste Abschluss-Element 21 ist einteilig mit dem Stütz-Element 44 ausgebildet. Es ist somit ebenfalls ein Bestandteil der Führungs- und Dichtungseinheit 3. Prinzipiell ist es jedoch auch denkbar, das erste Abschluss-Element 21 und das Stütz-Element 44 als separate Teile auszubilden. Für weitere Details bezüglich Ausführungsformen des ersten Abschluss-Elements 21 sei auf die DE 10 2005 023 756 A1 verwiesen.

Das erste Abschluss-Element weist einen ersten Ausgleichskanal auf, welcher eine Durchström-Verbindung zwischen dem ersten Teil-Arbeitsraum 17 und dem Ausgleichsraum 6 bildet.

Am zweiten Arbeitsraum-Ende 20 ist ein zweites Abschluss-Element 24 angeordnet. Das zweite Abschluss-Element 24 ist im inneren Gehäuse 8 angeordnet. Das zweite Abschluss-Element 24 kann insbesondere in das innere Gehäuse 8 eingesteckt, vorzugsweise eingepresst sein. Außerdem kann das innere Gehäuse 8 im Bereich des zweiten Arbeitsraum-Endes 20 umfangsseitig bereichsweise am äußeren Gehäuse 9 anliegen.

Das zweite Abschluss-Element 24 weist einen zweiten Ausgleichskanal auf, welcher eine Durchström-Verbindung zwischen dem zweiten Teil-Arbeitsraum 19 und dem Ausgleichsraum 6 bildet.

Das zweite Abschluss-Element 24 ist mit einer Anlageschulter 114 stirnseitig an dem inneren Gehäuse 8 axial abgestützt und mit einem Einsteckbund 115 an der inneren Zylindermantelfläche des inneren Gehäuses 8 radial abgestützt. Der Einsteckbund 115 ist mittels eines Radialfederelements 116 bezüglich der Längsachse 7 radial vorgespannt, wobei die Vorspannung axial mittels einer Spannmutter 117 an einem Spannbolzen 118 aufgebracht wird. Das innere Gehäuse 8 wird in dem Bereich, in dem der Einsteckbund 115 an der inneren Zylindermantelfläche des inneren Gehäuses 8 anliegt, radial nach außen gegen eine Innenseite des äußeren Gehäuses 9 gepresst und dadurch gehalten.

Für eine ordnungsgemäße Funktion des Dämpfers 1 sollte der Arbeitsraum 5 stets vollständig mit Dämpfungsfluid 10 gefüllt sein. Dies kann durch eine geeignete Ausbildung und Anordnung des zweiten Ausgleichskanals sowie eine an das Volumen des Arbeitsraums 5 und die Ausbildung des Ausgleichsraums 6 angepasste Menge an Dämpfungsfluid 10 erreicht werden. Der Dämpfer 1 weist insbesondere eine bevorzugte Einbaulage derart auf, dass die Ausschub-Richtung 40 der Richtung der Schwerkraft entgegengesetzt ist. Die ordnungsgemäße Funktion des Dämpfers 1 kann dann bis zu einem Verdrehwinkel von mindestens 77 ° aus der bevorzugten Einbaulage gewährleistet sein.

Im zweiten Ausgleichskanal ist ein Ausgleichs-Ventil 31 vorgesehen. Bezüglich der Ausgestaltung des Ausgleichs-Ventils 31 wird auf die DE 10 2010 029 180 A1 verwiesen.

Das Ausgleichs-Ventil 31 ist als selbsttätiges Ventil ausgebildet. Es kann als Einweg-Ventil ausgebildet sein. Es ist insbesondere derart ausgebildet, dass es eine Strömung vom Ausgleichsraum 6 durch den zweiten Ausgleichskanal in den zweiten Teil-Arbeitsraum 19 ermöglicht. Mit anderen Worten ist das Ausgleichs-Ventil 31 derartig ausgebildet, dass es bei einer Bewegung des Kolbens 13 in einer Ausschub-Richtung 40 parallel zur Richtung der Längsachse 7 öffnet.

Bei dem in den Fig. 1 bis 3 dargestellten Ausführungsbeispiel ist das Ausgleichs-Ventil 31 derart ausgebildet, dass es eine bidirektionale Strömung durch den zweiten Ausgleichskanal ermöglicht. Es ist somit als ZweiwegVentil ausgebildet. Das Ausgleichs-Ventil 31 kann insbesondere Prägungen aufweisen, welche unabhängig von der Stellung der Ventilscheibe einem bidirektionalen Durchfluss zwischen dem zweiten Teil-Arbeitsraum 19 und dem Ausgleichsraum 6 ermöglichen.

Allgemein ist vorgesehen, dass das Ausgleichs-Ventil 31 ein Überlast-Schutz-Element bildet, welches bei Überschreiten einer vorbestimmten Grenzkraft in Richtung der Längsachse 7 auf die Kolbenstange 12 ein Geöffnetsein des zweiten Ausgleichskanals sicherstellt. Die Aktivierungscharakteristik dieses Überlast-Schutzes kann durch geeignete Auswahl und Dimensionierung einer Ventil-Schraubenfeder und einer Ventil-Tellerfeder auf einfache Weise erreicht werden.

Ein alternativer konstruktiver Aufbau des Ausgleichs-Ventils 31 ist denkbar. Bezüglich weiterer Details des Ausgleichs-Ventils 31 sei auf die DE 10 2005 023 756 A1, insbesondere Abs. [0022], verwiesen.

Die Kolbenstange 12 ist mehrteilig, insbesondere zweiteilig ausgebildet. Sie umfasst eine äußere, rohrförmig ausgebildete Kolbenstangen-Hülse 48.

Die Kolbenstangen-Hülse 48 kann mit dem ersten Befestigungs-Element 14 verbunden sein. Das erste Befestigungs-Element 14 weist eine konzentrisch zur Längsachse 7 angeordnete Übergangspassung 66 auf, mit der das erste Befestigungs-Element auf eine Außenseite der Kolbenstange 12, insbesondere der Kolbenstangen-Hülse 48, aufgesteckt ist. Das erste Befestigungs-Element 14 ist mit der Kolbenstange 12 durch eine Verschweißung 67 verbunden.

Das erste Befestigungs-Element 14 kann alternativ ein Innengewinde aufweisen, mittels welchem das erste Befestigungs-Element 14 auf ein dazu passendes Außengewinde auf der Kolbenstangen-Hülse 48 aufgeschraubt ist.

In einem End-Bereich 69 weist eine Verstelleinheit 101 ein Verstellelement 102 mit einer Ausnehmung 70 auf. Die Ausnehmung 70 ist in Richtung senkrecht zur Längsachse 7 kreissegmentförmig ausgebildet. Sie weist einen Mittelpunktswinkel b auf. Der Mittelpunktswinkel beträgt mindestens 15 °, insbesondere mindestens 30 °, insbesondere mindestens 45 °, insbesondere mindestens 60 °, insbesondere mindestens 90 °. Er kann insbesondere auch 120 ° betragen. Als Obergrenze für den Mittelpunktswinkel sind höchstens 270 °, insbesondere höchstens 180 °, vorgesehen. Prinzipiell ist auch eine kreissektorförmige Ausbildung der Ausnehmung 70 möglich.

Die Ausnehmung 70 ist Teil eines Durchströmkanals 71, welcher eine Durchströmverbindung zwischen den Teil-Arbeitsräumen 17, 19 bildet. Zusätzlich zur Ausnehmung 70 umfasst der Durchströmkanal 71 mehrere Bohrungen 72 in der Kolbenstangen-Hülse 48. Mit anderen Worten bilden die Bohrungen 72 zusammen mit der Ausnehmung 70 den Durchströmkanal 71. Der Durchströmkanal 71 ist somit in der Kolbenstange 12 angeordnet.

Es ist mindestens eine Bohrung 72 in der Kolbenstangen-Hülse 48 vorgesehen. In dem in den Fig. 1 bis 3 dargestellten Ausführungsbeispiel weist die Kolbenstangen-Hülse 48 drei Bohrungen 72 auf. Sie kann auch vier, fünf oder mehr Bohrungen 72 aufweisen. Die Bohrungen 72 sind jeweils in Umfangsrichtung versetzt zueinander angeordnet. Die Bohrungen 72 weisen alle dieselbe Größe auf. Unterschiedlich große Bohrungen 72 sind jedoch ebenfalls denkbar.

Alternativ zu mehreren, diskreten Bohrungen 72 kann die Kolbenstangen-Hülse 48 auch eine länglich ausgebildete Durchström-Öffnung aufweisen. Die Durchström-Öffnung erstreckt sich vorzugsweise in Umfangsrichtung. Sie überdeckt einen Winkelbereich, welcher höchstens so groß ist wie der Mittelpunktswinkel der Ausnehmung 70.

Mittels des End-Bereichs 69 sind die Bohrungen 72 selektiv verschließbar. Der End-Bereich 69 bildet somit das Verstellelement 102, mittels welchem der effektive Strömungs-Querschnitt des Durchströmkanals 71 verstellbar ist. Das Verstellelement zur Verstellung des effektiven Strömungs-Querschnitts des Durchströmkanals 71 ist somit im Inneren der Kolbenstange 12, insbesondere im Inneren der Kolbenstangen-Hülse 48, angeordnet.

Mittels des Verstellelements 102 ist der Durchströmkanal 71 zur Unterbrechung der Durchström-Verbindung zwischen den Teil-Arbeitsräumen 17, 19 insbesondere verschließbar. Hierdurch ist der Dämpfer 1 blockierbar.

Mehrere diskrete Bohrungen 72 ermöglichen mehrere, unterschiedliche, diskrete Dämpfungs-Einstellungen des Dämpfers 1. Der Dämpfer 1 kann somit eine stufenförmige Dämpfungs-Kennlinie aufweisen. Durch eine vorteilhafte Anordnung der Bohrungen 72 ist es möglich, ein kontinuierlich verstellbares Dämpfungs-Verhalten des Dämpfers 1 zu ermöglichen, indem beispielsweise die Bohrungen 72 entlang einer Betätigungsrichtung des Verstellelements 102 zumindest teilweise überlappend angeordnet sind. Die Verstellrichtung des Verstellelements 102 ist axial und/oder tangential zur Längsachse 7 orientiert. Ebenso ermöglicht eine längliche Öffnung in der Kolbenstangen-Hülse 48 ein kontinuierlich verstellbares Dämpfungs-Verhalten des Dämpfers 1.

Das Verstellelement 102 ist gegen die Kolbenstangen-Hülse 48 verlagerbar, insbesondere verdrehbar.

Die Kolbenstangen-Hülse 48 weist an einem ersten, im inneren Gehäuse 8 angeordneten Kolbenstangen-Ende 50 einen reduzierten Außendurchmesser auf, wodurch ein Kolbenstangen-Anschlag 51 ausgebildet ist. Auf der Kolbenstangen-Hülse 48 sind im Bereich des ersten Kolbenstangen-Endes 50 ausgehend vom Kolbenstangen-Anschlag 51 eine erste Distanzscheibe 52, ein erstes Verschluss-Element 53, insbesondere in Form einer Tellerfeder, eine Kolbenscheibe 54, ein zweites Verschluss-Element 55, insbesondere in Form einer Tellerfeder, eine zweite Distanzscheibe 56 und eine Sicherungsmutter 57 angeordnet. Die Sicherungsmutter 57 ist auf ein Kolbenstangen-Gewinde aufgeschraubt und sichert den Kolben 13 auf der Kolbenstange 12. Der Kolben 13 wird durch das erste Verschluss-Element 53, die Kolbenscheibe 54, das zweite Verschluss-Element 55 und eine Kolben-Dichtung 58 gebildet. Die Kolben-Dichtung 58 ist ringförmig ausgebildet und in einer Ringnut 59 in der Kolbenscheibe 54 angeordnet. Die Kolben-Dichtung 58 dichtet die Kolbenscheibe 54 somit gegen das innere Gehäuse 8 ab.

In der Kolbenscheibe 54 sind mehrere Durchströmkanäle 60 vorgesehen. Die Durchströmkanäle 60 bilden eine Durchström-Verbindung zwischen dem ersten Teil-Arbeitsraum 17 und dem zweiten Teil-Arbeitsraum 19. Die Verschluss-Elemente 53, 55 wirken jeweils mit mindestens einem der Durchströmkanäle 60 zusammen. Sie können auch mit mehreren der Durchströmkanäle 60 zusammenwirken. Sie können insbesondere als Ventil-Element wirken und den effizienten Strömungsquerschnitt der Durchströmkanäle 60 in Abhängigkeit einer Bewegungsrichtung und/oder -geschwindigkeit des Kolbens 13 bezüglich der Ausschub-Richtung 40 beeinflussen. Sie können insbesondere derart ausgebildet sein, dass ausschließlich eine unidirektionale Strömung durch die Durchströmkanäle 60 möglich ist. In diesem Fall bilden die Verschluss-Elemente 53, 55 ein Einwegventil. Die Verschluss-Elemente 53, 55 können insbesondere derart ausgebildet sein, dass sie bei Überschreiten einer bestimmten Grenzkraft öffnen. Sie bilden in diesem Fall einen Überlast-Schutz.

Eine alternative Ausführung des Kolbens 13 ist denkbar. Diesbezüglich sowie für weitere Details bezüglich des Durchströmkanals 60 und der Verschluss-Elemente 53, 55 sei auf die Beschreibung der DE 10 2005 023 756 A1, insbesondere Abs. [0023]f., verwiesen. Es ist insbesondere auch möglich, den Kolben 13 dicht, das heißt ohne Durchströmkanäle 60 auszubilden. In diesem Fall sind die Teil-Arbeitsräume 17, 19 fluiddicht durch den Kolben 13 getrennt. Der Durchströmkanal 71 in der Kolbenstange 12 bildet in diesem Fall die einzige direkte Durchström-Verbindung zwischen den Teil-Arbeitsräumen 17, 19.

Die Verstelleinheit 101 dient zum Verstellen der Dämpfungskraft des Dämpfers 1. Die Verstelleinheit 101 weist das Verstellelement 102 auf. Das Verstellelement 102 ist als gestufter Wellenabsatz ausgeführt. Das Verstellelement 102 kann beispielsweise mit einem unrunden Endbereich ausgeführt sein, wie dies gemäß der DE 10 2010 029 180 A1 bekannt ist. Das Verstellelement 102 ist mittels eines O-Rings als Dichtungselement 103 an einer inneren Zylindermantelfläche der hohl ausgeführten Kolbenstange 12 abgedichtet. Gemäß einem nicht gezeigten Ausführungsbeispiel kann das Dichtungselement entlang der Längsachse 7 auch zwischen dem Motor 105 und der Positionserkennungseinheit 107 angeordnet sein. In diesem Fall wären der Motor 105, das Getriebe 104 und das Verstellelement 102 dem Dämpfungsfluid, insbesondere dem Dämpfungsöl, ausgesetzt. Dagegen wäre es ausreichend, die Abdichtung gegenüber Positionserkennungseinheit 107 zu gewährleisten und die Verkabelung, die die Verstelleinheit 101 mit einer Steuerungseinheit verbindet, zu gewährleisten.

Das Verstellelement 102 ist über ein Getriebe 104 mit einem Elektromotor 105 gekoppelt. Der Elektromotor 105 stellt eine Drehbewegung zur Verfügung, die über das Getriebe 104 auf das Verstellelement 102 übertragen wird. Das Verstellelement 102 ist in dem Hohlraum 106 der Kolbenstange 12 bezüglich der Längsachse 7 drehbar angeordnet.

Die Axialverlagerung des Verstellelements 102 ist beispielsweise mittels eines elektrischen Antriebs, insbesondere mittels eines Elektromotors, realisiert. Zusätzlich oder alternativ können hydraulische und/oder pneumatische Antriebe zum Bereitstellen der axialen Antriebsbewegung vorgesehen sein. Die Umsetzung der rotatorischen Antriebsbewegung kann beispielsweise mittels eines Spindelantriebs umgesetzt werden. Alternativ können lineare Verstellaktoren wie beispielsweise ein Linearmotor, ein Elektromagnet, ein Pneumatikzylinder und/oder ein Hydraulikzylinder eingesetzt werden.

An einem dem Arbeitsraum 5 abgewandten Ende des Motors 105 ist eine Positionserkennungseinheit 107 in Form eines Encoders angeordnet. Die Positionserkennungseinheit 107 dient zur Erkennung der inkrementellen Relativposition der Verstelleinheit 101, insbesondere des Verstellelements 102.

Insbesondere ist ein Referenzelement 108 vorgesehen. Gemäß dem gezeigten Ausführungsbeispiel ist das Referenzelement 108 als nach innen in den Hohlraum 106 vorstehender Radialzapfen ausgeführt, der an einer Innenfläche der Kolbenstange 12 angeordnet ist. Das Referenzelement 108 ist ein mechanisches Referenzanschlagelement für das Verstellelement 102.

Anstelle des Radialzapfens 108 können auf andere Referenzelemente eingesetzt werden. Beispielsweise kann eine Referenzmarke vorgesehen sein, die beispielsweise optisch erkannt wird. Die Referenzmarke kann auch magnetisch ausgeführt sein, die mit dem Verstellelement korrespondiert. Wesentlich ist, dass durch das Referenzelement der Drehwinkel, mit dem das Verstellelement 102 um die Längsachse 7 drehbar ist, kleiner ist als 360°. Damit ist eine eindeutige Zuordnung der Absolutposition des Verstellelements 102 über die Positionserkennungseinheit 107 möglich.

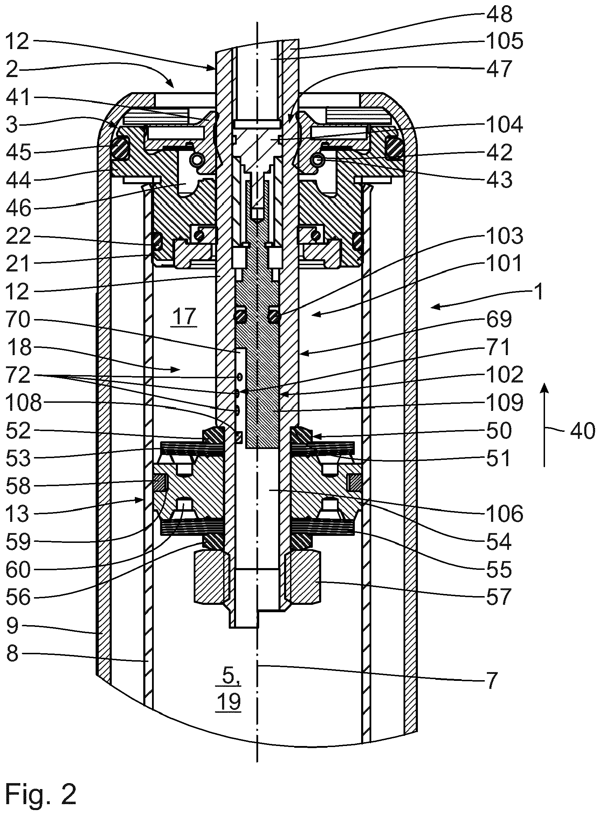

Die rohrförmige Kolbenstange 12 weist mehrere zueinander beabstandet angeordnete Durchströmöffnungen 72 auf. Die Durchströmöffnungen 72 durchdringen die Zylindermantelwand der Kolbenstange 12 vollständig. Die Durchströmöffnungen 72 bilden eine Fluidverbindung des Hohlraums 106 mit dem oberen, ersten Teil-Arbeitsraum 17. In der in Fig. 2 gezeigten Anordnung des Verstellelements 102 liegen die Durchströmöffnungen 72 frei. In dieser Anordnung ist eine Durchströmverbindung von dem ersten Teil-Arbeitsraum 17 über den Hohlraum 106 in der Kolbenstange 12 in den zweiten Teil-Arbeitsraum 19 gegeben.

Durch ein Verdrehen des Verstellelements 102 gegenüber der Kolbenstange 12 werden die Durchströmöffnungen 72 sukzessive abgedeckt. Dazu ist es von Vorteil, wenn die Durchströmöffnungen 72 entlang einer äußeren Umfangsrichtung um die Längsachse 7 beabstandet zueinander angeordnet sind. Das bedeutet, dass die einzelnen Durchströmöffnungen 72 bezogen auf eine Drehwinkelposition um die Längsachse 7 voneinander beabstandet sind.

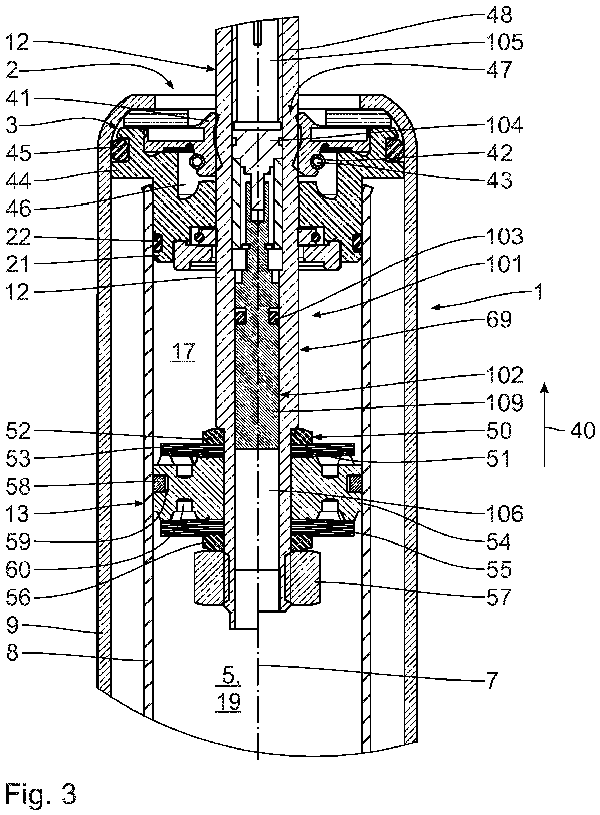

Bei einer Betätigung des Verstellaktors 105 wird die Drehbewegung über das Getriebe 104 auf das Verstellelement 102 übertragen. Bei einer ausreichenden Drehbewegung kommt das Verstellelement 102 wie in Fig. 3 gezeigt in einer Anordnung zu liegen, in der die Durchströmöffnungen 72 verschlossen sind. In dieser Anordnung ist eine Fluidverbindung zwischen dem ersten Teil-Arbeitsraum 17 und dem zweiten Teil-Arbeitsraum 19 über den Hohlraum 106 der Kolbenstange 12 nicht gegeben. Die Fluidverbindung ist in dieser Anordnung unterbrochen.

In Abhängigkeit der Drehposition des Verstellelements 102 gegenüber der Kolbenstange 12 können mehr oder weniger Durchströmöffnungen 72 beziehungsweise mehr oder weniger einer Gesamtdurchströmfläche des Durchströmkanals freigegeben werden. In Abhängigkeit der Größe der effektiven Strömungsquerschnittsfläche des Durchströmkanals verändert sich die Dämpfungswirkung beziehungsweise die Dämpfungskraft des Dämpfers 1. Je kleiner die effektive Strömungsquerschnittsfläche, desto größer ist die Dämpfungskraft des Dämpfers 1.
Zusätzlich oder alternativ kann zwischen dem Getriebe 104 und dem Verstellelement 102 ein Potentiometer vorgesehen werden, um die Absolutposition des Verstellelements 102 unmittelbar zu erfassen.

Die Referenzfahrt ermöglicht nach einer Stromunterbrechung oder nach einem unvorhergesehenen Positionsverlust in der Steuerungseinheit das Widerherstellen einer Absolutposition. Dazu wird das Verstellelement 102 an eine Referenzposition, die durch das Referenzelement 108 definiert ist, gefahren.

Im Folgenden wird die Funktion des Dämpfers 1 beschrieben. In der in den Fig. 1 und 2 dargestellten Verstell-Position des Verstellelements ist der Durchströmkanal 71 in der Kolbenstange 12 maximal geöffnet. Bei einer Bewegung des Kolbens 13 gegen die Ausschub-Richtung 40 kann das Dämpfungsfluid 10 somit vom zweiten Teil-Arbeitsraum 19 durch den Durchströmkanal 71 in der Kolbenstange 12 in den ersten Teil-Arbeitsraum 17 strömen. Außerdem kann das durch das zusätzliche Volumen der Kolbenstange 12 aus dem Arbeitsraum 5 verdrängte Dämpfungsfluid 10 durch den ersten Ausgleichskanal in den Ausgleichsraum 6 strömen.

Es ist vorgesehen, dass der zweite Ausgleichskanal bei kleinen, gegen die Ausschub-Richtung 40 gerichteten Kräften auf die Kolbenstange 12, insbesondere bei kleinen Geschwindigkeiten des Kolbens 13 gegen die Ausschub-Richtung 40 soweit wie möglich geschlossen ist. Bei einem Ausgleichs-Ventil 31, welches eine bidirektionale Strömung durch den zweiten Ausgleichskanal ermöglicht, ist das Ausgleichs-Ventil 31 nicht vollständig geschlossen. Aufgrund der Prägungen ist stets eine bidirektionale Strömung durch den zweiten Ausgleichskanal möglich. Prinzipiell ist es jedoch auch möglich, das Ausgleichs-Ventil 31 als Einweg-Ventil auszubilden, welches sich bei kleinen, gegen die Ausschub-Richtung 40 gerichteten Kräften auf die Kolbenstange 12 in einer Sperr-Stellung befindet. Das Ansprech-Verhalten des Ausgleichs-Ventils 31 wird durch eine geeignete Auswahl und Einstellung der Ventil-Schraubenfeder und der Ventil-Tellerfeder bestimmt.

Entsprechend kann der Durchströmkanal 60 im Kolben 13 bei kleinen Geschwindigkeiten des Kolbens 13 durch das erste und/oder zweite Verschluss-Element 53, 55 verschlossen sein.

Bei einer Bewegung des Kolbens 13 in Ausschub-Richtung 40 kann das Dämpfungsfluid 10 vom ersten Teil-Arbeitsraum 17 durch den Durchströmkanal 71 in der Kolbenstange 12 in den zweiten Teil-Arbeitsraum 19 strömen. Außerdem öffnet das Ausgleichs-Ventil 31 und ermöglicht ein Durchströmen von Dämpfungsfluid 10 aus dem Ausgleichsraum 6 durch den zweiten Ausgleichskanal in den zweiten Teil-Arbeitsraum 19. Hierdurch wird sichergestellt, dass der Arbeitsraum 5 abgesehen von dem durch die Kolben-Einrichtung 11 verdrängten Volumen stets vollständig mit Dämpfungsfluid 10 gefüllt ist.

Das Ausgleichs-Ventil 31 im zweiten Abschluss-Element und/oder die Verschluss-Elemente 53, 55 im Kolben 13 können derart ausgebildet sein, dass bei einer Bewegung der Kolbenstange 12 in Ausschub-Richtung 40 ein Durchströmen von Dämpfungsfluid 10 durch den zweiten Ausgleichskanal im zweiten Abschluss-Element 24 und/oder den Durchströmkanal 60 im Kolben 13 nur bei einer großen Ausschub-Geschwindigkeit der Kolbenstange 12 oder einer großen Kraft in Ausschub-Richtung 40 auf diese stattfindet.

Der Durchströmkanal 60 im Kolben 13 und/oder das Ausgleichs-Ventil 31 im zweiten Abschluss-Element wirken somit als Überlastschutz, welcher bei großen Geschwindigkeiten und/oder Kräften auf die Kolbenstange 12 auslöst und dadurch eine Beschädigung des Dämpfers 1 verhindert. Selbstverständlich lässt sich das Dämpfungsverhalten des Dämpfers 1 durch geeignete Auswahl der Verschluss-Elemente 53, 55 des Durchströmkanals 60 und/oder der Ventil-Elemente des Ausgleichs-Ventils 31 je nach Bedarf beeinflussen.

Durch ein Verdrehen des Verstellelements 102 um die Längsachse 7 lassen sich die Bohrungen 72 des Durchströmkanals 71 in der Kolbenstange 12 verschließen. Hierdurch wird der effektive Strömungs-Querschnitt des Durchströmkanals 71 in der Kolbenstange 12 verringert, insbesondere verschlossen, insbesondere vollständig verschlossen. Ein Durchströmen von Dämpfungsfluid 10 aus dem ersten Teil-Arbeitsraum 17 durch den Durchströmkanal 71 in den zweiten Teil-Arbeitsraum 19 oder umgekehrt, ist dann nicht mehr möglich.

Insofern das Ausgleichs-Ventil 31 ein Durchströmen von Dämpfungsfluid 10 aus dem zweiten Teil-Arbeitsraum 19 in den Ausgleichsraum 6 verhindert, ist die Kolbenstange 12 ist in dieser Stellung des Verstellelements 102 aufgrund des vollständig abgeschlossenen Volumens des zweiten Teil-Arbeitsraums 19 gegen eine Verschiebung gegen die Ausschub-Richtung 40 blockiert.

Übersteigt die Kraft auf die Kolbenstange 12 in Richtung gegen die Ausschub-Richtung 40 jedoch eine vorbestimmten Grenzkraft, wird der Überlastschutz aktiviert und der Durchströmkanal 60 im Kolben 13 und/oder der zweite Ausgleichskanal im zweiten Abschluss-Element geöffnet.

Da das Ausgleichs-Ventil 31 im zweiten Abschluss-Element bei einer Bewegung des Kolbens 13 in Ausschub-Richtung 40 öffnet, um ein Durchströmen von Dämpfungsfluid 10 aus dem Ausgleichsraum 6 in den zweiten Teil-Arbeitsraum 19 zu ermöglichen, und der erste Ausgleichskanal im ersten Abschluss-Element 21 geschlossen ist, ist der Dämpfer 1 auch im Falle eines verschlossenen Durchströmkanals 71 in der Kolbenstange 12 nicht vollständig gegen eine Bewegung der Kolbenstange 12 in Ausschub-Richtung 40 blockiert. Er weist allerdings eine maximal harte Dämpfung auf, da das Dämpfungsfluid 10 nicht durch den Durchströmkanal 71 in der Kolbenstange 12 vom ersten Teil-Arbeitsraum 17 in den zweiten Teil-Arbeitsraum 19 strömen kann, sondern vom ersten Teil-Arbeitsraum 17 in den Ausgleichsraum 6 und vom Ausgleichsraum 6 durch den zweiten Ausgleichskanal in den zweiten Teil-Arbeitsraum 19 strömt. Die Dämpfungscharakteristik wird somit in diesem Fall durch die Ausgleichskanäle sowie insbesondere durch das Ausgleichs-Ventil 31 bestimmt.

In einer alternativen Ausführungsform kann vorgesehen sein, die Verschluss-Elemente 53, 55 derart auszubilden, dass die Durchströmkanäle 60 im Kolben 13 in Abhängigkeit von der Geschwindigkeit der Bewegung der Kolbenstange 12 in Ausschub-Richtung 40 öffnen bzw. schließen. Hierdurch kann eine geschwindigkeits-abhängige Dämpfungs-Kennlinie erreicht werden. Für Details diesbezüglich wird auf die DE 10 2005 023 756 A1, Abs. [0028] ff. verwiesen.

Im Falle einer Unterbrechung der Stromversorgung gewährleistet die Positionserkennungseinheit 107 ein Zurücksetzen der Positionserkennung mittels einer Referenzfahrt. Dazu dient insbesondere eine Referenzmarke, die beispielsweise als Anschlagelement ausgeführt sein kann. Es ist gewährleistet, dass nach einer unvorhergesehenen Unterbrechung der Verlagerung des Verstellelements dessen Position eindeutig und unkompliziert feststellbar bzw. festlegbar ist.

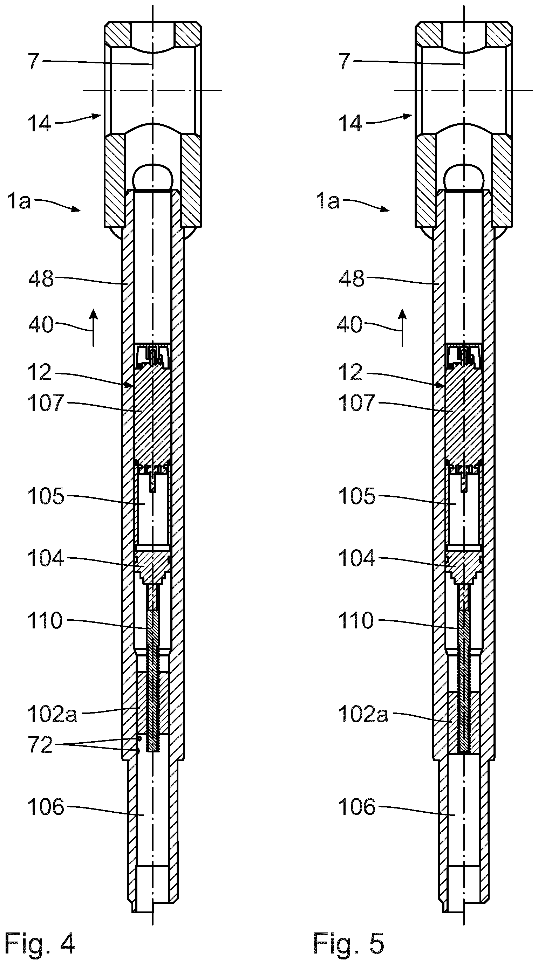

Im Folgenden wird unter Bezugnahme auf Fig. 4 und 5 ein zweites Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Bei dem Dämpfer 1a ist das Verstellelement 102a als Spindelmutter ausgeführt, die von einer korrespondierenden Verlagerungsspindel 110 angetrieben werden kann. Die Verlagerungsspindel bildet eine Kraftübertragungsvorrichtung, die unmittelbar mit dem Getriebe 104 gekoppelt ist. Eine Drehbewegung der Verlagerungsspindel 110 bewirkt - in Abhängigkeit der Drehrichtung um die Längsachse 7 - eine Verlagerung des Verstellelements 102a entlang der Längsachse 7 in oder entgegen der Ausschubrichtung 40.

In der in Fig. 4 gezeigten Anordnung sind einige der Durchströmöffnungen 72 freigegeben. In der in Fig. 5 gezeigten Anordnung, in der die Spindelmutter 102a weiter nach unten, dem Arbeitsraum 5 des Dämpfers zugewandt angeordnet ist, sind Durchströmöffnungen 72 abgedeckt. Diese Anordnung entspricht der Anordnung gemäß Fig. 3 des ersten Ausführungsbeispiels.

In einer weiteren, nicht dargestellten Ausführungsform kann die Verstelleinheit als Nadelventil ausgeführt sein mit einer entlang der Längsachse 7 verlagerbaren Nadel, die in eine korrespondierende Ventilöffnung eintauchen kann. In Abhängigkeit der Eintauchtiefe der Ventilnadel in der Ventilöffnung ist die effektive Strömungsquerschnittsfläche verändert. Vorteilhaft ist es, wenn die Ventilnadel und/oder die Ventilöffnung entlang der Längsachse 7 zumindest abschnittsweise einen konischen Verlauf aufweisen, so dass sich mit zunehmender Eindringtiefe der Ventilnadel in die Ventilöffnung die effektive Strömungsquerschnittsfläche reduziert.

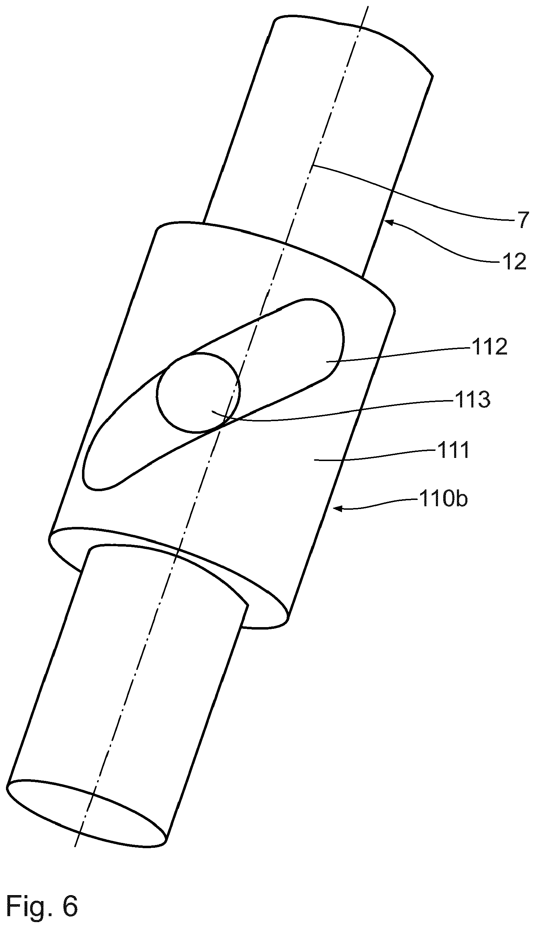

Nachfolgend wird anhand der Fig. 6 ein drittes Ausführungsbeispiel der Erfindung beschrieben. Identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b.

Wie bei dem zweiten Ausführungsbeispiel ist ein Kinematikelement 110b vorgesehen, dass eine Antriebsdrehbewegung in eine Axialverlagerung des Verstellelements 102b umsetzt.

Die Durchströmöffnungen 72 sind insbesondere entlang der Längsachse 7 axial beabstandet zueinander angeordnet. Durch eine Axialverlagerung des Verstellelements 102a können sukzessive mehr oder weniger Durchströmöffnungen 72 abgedeckt beziehungsweise freigegeben werden.

Es ist denkbar, nur eine einzige Durchströmöffnung beispielsweise in Form eines Langlochs vorzusehen, das kontinuierlich mittels des Verstellelements 102a abgedeckt beziehungsweise freigeben werden kann. Dadurch ist eine kontinuierliche Verstellung der Dämpfungskraft des Dämpfers 1a möglich.

Die Durchströmöffnungen 72 sind an der Kolbenstange 12 oberhalb eines radialen Kolbenstangen-Anschlags 51 angeordnet. Die Durchströmöffnungen 72 sind dem ersten Teil-Arbeitsraum 17 zugeordnet.

Das Kinematikelement 110b ist als Bewegungsgewinde ausgeführt, mit einer äußeren Hülse 111, die eine schraubenlinienförmige Schlitz-Führung 112 aufweist. In der Schlitz-Führung 112 ist ein Querbolzen 113 angeordnet, der quer zur Längsachse 7 orientiert ist. Der Querbolzen 113 ist drehfest mit einem inneren, nicht näher dargestellten Verlagerungselement verbunden. Bei einer Antriebsdrehbewegung des Verstellaktors und des Verstellelements wird dieses mittels des Querbolzens 113 in dem Führungsschlitz 112 zwangsgeführt und in Abhängigkeit der Drehrichtung nach oben beziehungsweise nach unten entlang der Längsachse 7 verlagert.

## Patentansprüche

1. Dämpfer umfassend
a. ein einen Arbeitsraum (5) aufweisendes Gehäuse (8),
b. in dem Arbeitsraum (5) befindliches Dämpfungsfluid (10),
c. eine im Arbeitsraum (5) angeordnete Kolben-Einheit (11) mit
i. einer eine Längsachse (7) aufweisenden Kolbenstange (12),
ii. einem an der Kolbenstange (12) befestigten Kolben (13), der den Arbeitsraum (5) in einen ersten Teil-Arbeitsraum (17) und in einen zweiten Teil-Arbeitsraum (19) unterteilt,
iii. einem den ersten Teil-Arbeitsraum (17) und den zweiten Teil-Arbeitsraum (19) verbindenden Durchströmkanal (71),
d. eine Verstelleinheit (101) zum Verstellen der Dämpfungskraft des Dämpfers (1) mit
i. einem Verstellelement (102) zum Verstellen der effektiven Strömungsquerschnittsfläche des Durchströmkanals (71),
ii. einem Verstellaktor (105) zum automatisierten Verstellen einer Anordnung des Verstellelements (102) und der Kolbenstange (12),
wobei die Verstelleinheit (101) innerhalb des Dämpfers (1) angeordnet ist.

2. Dämpfer gemäß Anspruch 1, **gekennzeichnet durch** eine Steuerungseinheit, die mit der Verstelleinheit (101) in Signalverbindung steht, zum gesteuerten Verstellen der effektiven Strömungsquerschnittsfläche des Durchströmkanals (71).

3. Dämpfer gemäß einem der vorstehenden Ansprüche, **dadurch gekennzeichnet, dass** das Verstellelement (102) und die Kolbenstange (12) bezüglich der Längsachse (7) relativ zueinander drehbar sind.

4. Dämpfer gemäß einem der vorstehenden Ansprüche, **dadurch gekennzeichnet, dass** das Verstellelement (102) bezüglich der Längsachse (7) drehbar ist.

5. Dämpfer gemäß Anspruch 4, **dadurch gekennzeichnet, dass** das Verstellelement (102) als Wellenabsatz ausgeführt ist, der entlang der Längsachse (7), insbesondere mehrfach, gestuft ausgeführt ist, wobei mindestens eine Stufe des Wellenabsatzes eine senkrecht zur Längsachse (7) orientierte Querschnittsfläche aufweist, die unrund ausgeführt ist.

6. Dämpfer gemäß einem der vorstehenden Ansprüche, **dadurch gekennzeichnet, dass** das Verstellelement (102) bezüglich der Längsachse (7) axial verlagerbar ist.

7. Dämpfer gemäß Anspruch 6, **dadurch gekennzeichnet, dass** das Verstellelement (102) als Spindelmutter ausgeführt ist.

8. Dämpfer gemäß Anspruch 6 oder 7, **dadurch gekennzeichnet, dass** die Verstelleinheit (101) als Nadelventil ausgeführt ist.

9. Dämpfer gemäß einem der vorstehenden Ansprüche, **dadurch gekennzeichnet, dass** die Verstelleinheit (101) in der Kolbenstange (12) integriert angeordnet ist.

10. Dämpfer gemäß einem der vorstehenden Ansprüche, **dadurch gekennzeichnet, dass** die Kolbenstange (12) rohrförmig ausgeführt ist.

11. Dämpfer gemäß einem der vorstehenden Ansprüche, **gekennzeichnet durch** eine Positionserkennungseinheit (107), die insbesondere mit der Verstelleinheit (101), insbesondere mit dem Verstellaktor (105), in Signalverbindung steht.

12. Dämpfer gemäß einem der vorstehenden Ansprüche, **gekennzeichnet durch** ein Referenzelement (108) zum Definieren einer Referenzposition des Verstellelements (102).

13. Dämpfer gemäß einem der vorstehenden Ansprüche, **dadurch gekennzeichnet, dass** der Verstellaktor (105) als Drehantrieb, insbesondere als Elektromotor, ausgeführt ist.

14. Dämpfer gemäß einem der vorstehenden Ansprüche, **gekennzeichnet durch** ein Dichtungselement (103) zum Abdichten eines Hohlraums (106) der Kolbenstange (12).
